(19) **Europäisches Patentamt**
**European Patent Office**
**Office européen des brevets**

(11) **EP 0 786 604 B1**

(12) **EUROPEAN PATENT SPECIFICATION**

(45) Date of publication and mention
of the grant of the patent:
**13.08.2003   Bulletin 2003/33**

(51) Int Cl.[7]: **F16C 19/18**, F16C 25/06

(21) Application number: **97106069.4**

(22) Date of filing: **30.12.1992**

(54) **Double-row ball bearing**

Zweireihiges Kugellager

Palier à roulement à deux rangées de billes

(84) Designated Contracting States:
**DE FR GB IT**

(30) Priority:  **06.10.1992   JP 29212692**

(43) Date of publication of application:
**30.07.1997   Bulletin 1997/31**

(62) Document number(s) of the earlier application(s) in
accordance with Art. 76 EPC:
**92311850.9 / 0 591 587**

(73) Proprietor: **MINEBEA KABUSHIKI-KAISHA**
**Kitasaku-gun, Nagano-ken (JP)**

(72) Inventors:
 • **Obara, Rikuro**
  **Miyota-cho, Kitasaku-gun, Nagano-ken (JP)**
 • **Tatsuno, Katashi**
  **Miyota-cho, Kitasaku-gun, Nagano-ken (JP)**

(74) Representative: **Johnstone, Douglas Ian et al**
**Baron & Warren,**
**19 South End**
**Kensington, London W8 5BU (GB)**

(56) References cited:
**DE-A- 3 101 596          DE-A- 3 148 191**
**US-A- 4 713 704          US-A- 5 206 993**
**US-A- 5 226 737**

**Description**

The present invention relates to a double-row ball bearing which is particularly adaptable to Office Automation instruments.

In ball bearings, there is a so-called "direct type of ball bearing" in which a ball race is directly formed in an outer peripheral surface of an axle.

In such direct type of ball bearing, in cases where the ball bearing has a single row of balls only, it is very easy to have the balls aligned with each of an axle ball race (which is formed in an outer peripheral surface of the axle) and an outer-ring ball race (which is formed in an inner peripheral surface of an outer ring). In contrast with this, in cases where the ball bearing has a pair of rows of balls, i.e., where the ball bearing is of a double-row type, it is very difficult to have the balls and the races aligned with the races.

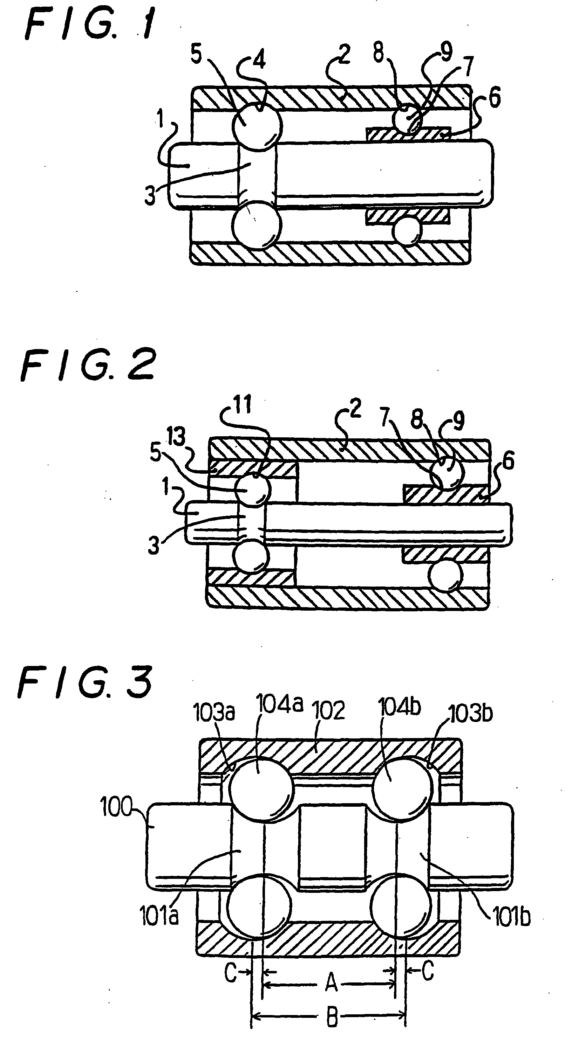

This will be described with reference to Fig. 3 which shows a conventional double-row ball bearing in which: a pair of axle ball races 101a, 101b are formed in an outer peripheral surface of an axle 100 so as to extend circumferentially a pair of outer-ring ball races 103a, 103b are formed in an inner surface of an outer ring 102; a plurality of balls 104a and 104b are disposed between the axle ball race 101a and the outer-ring ball race 103a, and between the axle ball race 101b and the outer-ring ball race 103b, respectively.

In the double-row ball bearing having the above construction, the following equation must be satisfied:

$$B > A$$

where: "A" denotes a distance between center lines of the axle ball races 101a, 101b; and "B" denotes a distance between center lines of the outer-ring ball races 103a, 103b.

In cases where "B" is too much larger than "A" excessive loads are applied to the balls and the races which deform so that the ball bearing is damaged.

Particularly, in case of miniature ball bearings, a difference between "B" and "A", and more particularly an axial clearance denoted by the reference "C" having a magnitude of ("B" - "A") x 1/2 must be of the order of submicrons.

In the conventional double-row ball bearing, the pair of outer-ring ball races 103a and 103b are previously formed in the inner peripheral surface of the outer ring 102 so as to correspond to the pair of axle ball races 101a and 101b of the axle 1, respectively.

Consequently, such outer-ring ball races 103a, 103b must be formed so as to precisely correspond to the axle ball races 101a, 101b. Further, in assembling of the outer ring 102 with the axle 100, it is necessary to keep the axial clearance C at a proper value, which requires the assembling work to be conducted in an extremely precise manner. In addition, once the bearing is assembled, the thus assembled bearing can not be adjusted later.

It is an object of the present invention to provide a double-row ball bearing which: has a pre-load easily applied to an inner ring (which is mounted on an axle) or to an outer ring (which is mounted in a sleeve); enables the axial clearance (which is defined between the ball races) to be precisely set; is excellent in rigidity; improved in so-called "raceway run-out with side"; is excellent in properties resistant to vibration; is easily assembled, which reduces manufacturing costs of the double-row ball bearings of the present invention.

A double-row ball bearing for office automation equipment, which goes only part way towards meeting the above objectives, is described in patent US 4,713,704. This double-row ball bearing has the features set out in the preamble of claim 1 and has a stepped-diameter shaft which complicates fabrication of the components of the ball bearing.

According to the present invention there is provided a double-row ball bearing comprising:

an axle;
a sleeve surrounding said axle;
first and second sets of balls;
an inner ring in a surface of which an inner ball race for the second set of balls is formed;

wherein said first set of balls run between an axle ball race formed in an outer surface of said axle and an outer ball race associated with said sleeve;
a pre-load is applied to said inner ring which is then fixed so that said first and second set of balls are set at a suitable axial position;
said axle ball race is directly formed in the outer surface of said axle;
said pre-loaded inner ring is mounted on said axle and has said inner ball race for said second set of balls formed in its outer surface;
said second set of balls run between said inner ball race of said inner ring and an outer ball race directly formed in an inner surface of said sleeve; and
said axle ball race and said inner ball race are of a deep groove type,
characterised in that said axle, apart from the axle ball race (3) therein, is of uniform diameter, and
each of said outer ball race is of a deep groove type which is not a race for an angular ball bearing.

A pre-load is applied to the inner ring (which is mounted on the axle) so that an axial clearance is set at a predetermined value, and the inner ring is fixed to the axle in a condition in which the axial clearance is set at the predetermined value.

The outer ball race associated with the sleeve may be formed in the inner peripheral surface of the sleeve, so that the first set of balls are disposed between the axle ball race and the sleeve ball race.

The inner ring may be slidably mounted on the axle, the outer ball race associated with the sleeve may be formed in an inner peripheral surface of an outer ring which is slidably or unslidably mounted in the sleeve so that a plurality of balls are disposed between the axle ball race and the outer-ring ball race, a pre-load is axially applied to at least one of the inner ring and the outer ring so that an axial clearance is set to a predetermined value, and in a condition in which the axial clearance is set at the predetermined value, the inner ring is fixed to the axle and/or the outer ring is fixed to the sleeve.

In the accompanying drawings:-

Fig. 1 is a longitudinal sectional view of a first embodiment of the double-row ball bearing of the present invention;
Fig. 2 is a longitudinal sectional view of a second embodiment of the double-row ball bearing of the present invention; and
Fig. 3 is a longitudinal sectional view of the conventional double-row ball bearing.

Both of the embodiments of the present invention are double-row ball bearings each of which is provided with an axle and a sleeve which forms an outer ring corresponding to the axle.

In a first embodiment of a double-row ball bearing of the present invention shown in Fig. 1, an axle ball race 3 and an outer-ring ball race 4 are formed in an outer peripheral surface of the axle 1 and an inner peripheral surface of the sleeve 2, respectively. A plurality of balls 5 are disposed between these ball races 3 and 4. An inner ring 6 is fixedly mounted on the axle 1. An inner-ring ball race 7 and another outer-ring ball race 8 are formed in an outer peripheral surface of the inner ring 6 and the inner peripheral surface of the sleeve 6, respectively. A plurality of balls 9 are disposed between these ball races 7 and 8.

In manufacturing of the double-row ball bearing having the above construction, the inner ring 6 is slidably mounted on the axle 1 so as to be axially movable along the axle 1. Then, the thus mounted inner ring 6 is subjected to a pre-load applied to the right face of the inner ring 6 as viewed in Fig. 1, so that the inner ring 6 is slightly moved to have the axial clearance C (which is already described above) reach a predetermined value. After the axial clearance reaches such predetermined value. the inner ring 6 is fixed to the axle 1 with a suitable adhesive agent and the like.

A method for applying the pre-load to the inner ring 6 of the double-row ball bearing of the present invention can be any one of the following methods: one using a weight; one using a spring; one using shims; one using spacers; and, one using screws.

Fig. 2 shows a second embodiment of the double-row ball bearing of the present invention. The embodiment of the present invention has the outer ring 13 disposed in one of its opposite sides and the inner ring 6 disposed in the other side. The double-row ball bearing shown in Fig. 2 uses the sleeve 2 of straight type and the axle 1 of straight type.

In manufacturing of the ball bearing shown in Fig. 2 the inner ring 6 and the outer ring 13 are slidably mounted in the axle 1 and in the sleeve 2, respectively; then, a pre-load is applied to each of the thus mounted inner ring 6 and outer ring 13; and, thereafter, the inner ring 6 and the outer ring 13 are fixed to the axle 1 and the sleeve 2 with a suitable adhesive agent, respectively.

In manufacturing of the double-row ball bearing of the present invention, since the inner ring (which is mounted on the axle) is axially slidable, it is possible to easily apply a pre-load to such axially slidable one so that the axial clearance reaches a predetermined value. Consequently, it is possible to provide the double-row ball bearings each of which is: excellent in rigidity; improved in so-called "raceway run-out with side"; and, excellent in properties resistant to vibration. In addition, each of the double-row ball bearings of the present invention is easily assembled, which reduces manufacturing costs of the double-row ball bearings of the present invention.

**Claims**

**1.** A double-row ball bearing comprising:

an axle (1);
a sleeve (2) surrounding said axle (1);
first (5) and second (9) sets of balls;
an inner ring (6) in a surface of which an inner ball race (7) for said second set of balls (9) is formed;

wherein said first set of balls (5) run between an axle ball race (3) formed in an outer surface of said axle and an outer ball race (4,11) associated with said sleeve (2);
a pre-load is applied to said inner ring (6) which is then fixed so that said first and second set of balls are set at a suitable axial position;
said axle ball race (3) is directly formed in the outer surface of said axle (1);
said pre-loaded inner ring (6) is mounted on said axle (1) and has said inner ball race (7) for said second set of balls (9) formed in its outer surface;
said second set of balls (9) run between said inner ball race (7) of said inner ring (6) and an outer ball race (8) directly formed in an inner surface of said sleeve; and
said axle ball race (3) and said inner ball race (7) are of a deep groove type,
**characterised in that** said axle, apart from the axle ball race (3) therein, is of uniform diameter, and

each of said outer ball race (4 or 11, 8) is of a deep groove type which is not a race for an angular ball bearing.

2. The double-row ball bearing claimed in claim 1, wherein said outer ball race (4) for said first set of balls (5) is directly formed in the inner surface of said sleeve (2), and said first set of balls (5) are larger than said second set of balls (9) in diameter.

3. The double-row ball bearing claimed in claim 1 wherein said outer ball race (11) for said first set of balls (5) is formed in an inner surface of an outer ring (13) mounted in said sleeve (2).

**Patentansprüche**

1. Doppelreihiges Kugellager, das Folgendes umfasst:

eine Achse (1);
eine die genannte Achse (1) umgebende Hülse (2);
einen ersten (5) und einen zweiten (9) Satz Kugeln;
einen Innenring (6), in einer von dessen Oberflächen ein innerer Kugellaufring (7) für den genannten zweiten Satz Kugeln (9) ausgebildet ist;

wobei der genannte erste Satz Kugeln (5) zwischen einem in einer Außenfläche der genannten Achse ausgebildeten Achsenkugellaufring (3) und einem mit der genannten Hülse (2) assoziierten äußeren Kugellaufring (4, 11) läuft;
wobei der genannte Innenring (6) mit einer Vorspannung beaufschlagt und dann so fixiert wird, dass sich der genannte erste und der genannte zweite Satz Kugeln in einer geeigneten axialen Position befinden,
wobei der genannte Achsenkugellaufring (3) direkt in der Außenfläche der genannten Achse (1) ausgebildet ist;
wobei der genannte vorgespannte Innenring (6) auf der genannten Achse (1) montiert ist und der genannte innere Kugellaufring (7) für den genannten zweiten Satz Kugeln (9) in seiner Außenfläche ausgebildet ist;
wobei der genannte zweite Satz Kugeln (9) zwischen dem genannten inneren Kugellaufring (7) des genannten Innenrings (6) und einem direkt in einer Innenfläche der genannten Hülse ausgebildeten äußeren Kugellaufring (8) läuft; und
der genannte Achsenkugellaufring (3) und der genannte innere Kugellaufring (7) von einem Typ mit tiefer Rille sind,
**dadurch gekennzeichnet, dass** die genannte Achse, außer dem Achsenkugellaufring (3) darin, einen gleichförmigen Durchmesser hat, und
jeder genannte äußere Kugellaufring (4 oder 11, 8) von einem Typ mit tiefer Rille ist, der kein Laufring für ein Schrägkugellager ist.

2. Doppelreihiges Kugellager nach Anspruch 1, bei dem der genannte äußere Kugellaufring (4) für den genannten ersten Satz Kugeln (5) direkt in der Innenfläche der genannten Hülse (2) ausgebildet ist und der genannte erste Satz Kugeln (5) einen größeren Durchmesser hat als der genannte zweite Satz Kugeln (9).

3. Doppelreihiges Kugellager nach Anspruch 1, bei dem der genannte äußere Kugellaufring (11) für den genannten ersten Satz Kugeln (5) in einer Innenfläche eines in der genannten Hülse (2) montierten Außenrings (13) ausgebildet ist.

**Revendications**

1. Un roulement à billes à deux rangées comprenant :

un axe (1) ;
une douille (2) qui entoure ledit axe (1) ;
un premier (5) et un deuxième (9) jeu de billes ;
une bague intérieure (6) dans une surface de laquelle est formé un chemin de roulement intérieur (7) pour ledit deuxième jeu de billes (9) ;

dans lequel ledit premier jeu de billes (5) roule entre un chemin de roulement d'axe (3) formé dans une surface extérieure dudit axe et un chemin de roulement extérieur (4, 11) associé à ladite douille (2) ;
une précharge est appliquée à ladite bague intérieure (6) qui est alors fixée de sorte que lesdits premier et deuxième jeux de billes sont mis en une position axiale appropriée ;
ledit chemin de roulement d'axe (3) est formé directement dans la surface extérieure dudit axe (1) ;
ladite bague intérieure préchargée (6) est montée sur ledit axe (1) et ledit chemin de roulement intérieur (7) pour ledit deuxième jeu de billes (9) est formé dans sa surface extérieure ;
ledit deuxième jeu de billes (9) roule entre ledit chemin de roulement intérieur (7) de ladite bague intérieure (6) et un chemin de roulement extérieur (8) formé directement dans une surface intérieure de ladite douille ; et
ledit chemin de roulement d'axe (3) et ledit chemin de roulement intérieur (7) sont d'un type à rainure profonde,
**caractérisé en ce que** ledit axe, exception faite du chemin de roulement d'axe (3) qu'il contient, présente un diamètre uniforme, et

chacun desdits chemins de roulement extérieurs (4 ou 11, 8) est d'un type à rainure profonde qui n'est pas un chemin de roulement pour un roulement à billes à contact oblique.

2. Le roulement à billes à deux rangées selon la revendication 1, dans lequel ledit chemin de roulement extérieur (4) pour ledit premier jeu de billes (5) est formé directement dans la surface intérieure de ladite douille (2), et les billes dudit premier jeu de billes (5) ont un plus grand diamètre que celles dudit deuxième jeu de billes (9).

3. Le roulement à billes à deux rangées selon la revendication 1, dans lequel ledit chemin de roulement extérieur (11) pour ledit premier jeu de billes (5) est formé dans une surface intérieure d'une bague extérieure (13) montée dans ladite douille (2).

# F I G. 1

# F I G. 2

# F I G. 3